# EUROPÄISCHE PATENTSCHRIFT

(11) **EP 0 562 240 B1**
(45) Veröffentlichungstag und Bekanntmachung des Hinweises auf die Patenterteilung: **17.05.1995**
(21) Anmeldenummer: 93101467.4
(22) Anmeldetag: 30.01.1993
(51) Int. Cl.: B60N 2/48

(54) **Rücksitzbank für Fahrzeuge**
Rear bench seat for cars
Banquette arrière pour véhicules

(30) Priorität: 27.03.1992 DE 4210036
(43) Veröffentlichungstag der Anmeldung: 29.09.1993
(73) Patentinhaber: AUDI AG, 85002 Ingolstadt (DE)
(72) Erfinder: Meisel, Michael, W-8074 Gaimersheim (DE)
(74) Vertreter: Engelhardt, Harald

(56) Entgegenhaltungen:
- CH-A- 599 866
- DE-A- 3 821 366
- FR-A- 420 511
- US-A- 3 253 859
- US-A- 4 869 448

## Beschreibung

Die Erfindung bezieht sich auf eine Rücksitzbank für Fahrzeuge, mit drei nebeneinander angeordneten Kopfstützen, gemäß dem Oberbegriff des Anspruchs 1 (s. zum Beispiel DE-A-3 821 366).

Die Rücksitzbank von Personenkraftwagen wird in den meisten Fällen serienmäßig mit zwei Kopfstützen ausgerüstet. Die Anordnung der beiden vorhandenen Kopfstützen ist so gewählt, daß sie die auf den äußeren Plätzen untergebrachten Fondpassagiere schützen.

Aufgrund von Kundenwünschen, aber auch um gesetzliche Forderungen in bestimmten Ländern zu erfüllen, kann es notwendig werden, zusätzlich den mittleren Platz der Rücksitzbank mit einer Kopfstütze zu versehen. Eine solche dritte Kopfstütze entspricht in ihrer Ausführung meist denjenigen Kopfstützen, die ohnehin im Fahrzeug verbaut werden. Da für die dritte Kopfstütze auch entsprechende Befestigungseinrichtungen an der Rücksitzbank bzw. an der sich daran nach hinten anschließenden Hutablage notwendig sind, sind bei der Fertigung zwei verschiedene Varianten zu steuern und z. B. zwei unterschiedliche Rückenlehnen für die Rücksitzbank nicht nur bei der Montage, sondern auch im Ersatzteilwesen bereitzuhalten. Wenn man dann noch berücksichtigt, daß Rücksitzbänke in den verschiedensten Farben und Stoffqualitäten bzw. in Leder angeboten werden und darüber hinaus Rücksitzbänke auch auf Wunsch mit verschiedenen weiteren Ausstattungen (z. B. Sitzheizung, Armlehne und Durchladeeinrichtung) angeboten werden, ergibt sich bei der ohnehin großen Vielfalt eine Verdoppelung der Varianten.

Das generelle Vorsehen einer Befestigungsmöglichkeit für eine dritte Kopfstütze ist mit den dafür erforderlichen Verstärkungen in der Rückenlehne sehr aufwendig und wirtschaftlich nicht sinnvoll, da derzeit nur ein sehr geringer Prozentsatz der Fahrzeuge mit einer solchen dritten Kopfstütze ausgerüstet wird.

Der Erfindung liegt die Aufgabe zugrunde, mit einfachen Mitteln eine kostengünstige Lösung zur Realisierung einer dritten Kopfstütze für eine Rücksitzbank aufzuzeigen.

Die Aufgabe wird durch die kennzeichnenden Merkmale des Anspruchs 1 gelöst.

Dadurch, daß die mittlere Kopfstütze über die Tragstangen der äußeren Kopfstützen gehalten ist, entfällt jegliche Änderung an der Rückenlehne der Rücksitzbank bzw. des sonst die Kopfstützen aufnehmenden Bauteils des Fahrzeuges.

Die die mittlere Kopfstütze aufnehmenden Ansätze können lösbar oder unlösbar an den inneren Tragstangen der äußeren Kopfstützen befestigt sein. Die lösbare Anordnung hat den Vorteil, daß gegenüber dem herkömmlichen Aufbau bei Realisierung einer dritten Kopfstütze überhaupt keine Änderungen notwendig sind, weder an der Rückenlehne, noch an der Fahrzeugkarosserie oder den äußeren Kopfstützen.

Zweckmäßiger erscheint jedoch eine unlösbare Festlegung der Ansätze an den Tragstangen der äußeren Kopfstützen, beispielsweise durch Schweißung. Bei dieser Variante ist es notwendig, jeweils eine der Tragstangen der äußeren Kopfstützen abzuwandeln, d. h. mit einem Ansatz für die mittlere Kopfstütze zu versehen. Da diese angepaßten Tragstangen bei symmetrischer Anordnung der mittleren Kopfstütze Gleichteile bilden können, welche nur versetzt zueinander eingebaut werden, reduziert sich der Bauaufwand in bezug auf die Befestigung der mittleren Kopfstütze nur auf eine geänderte Tragstange.

Besonders vorteilhaft ist, wenn jeder Ansatz in seinem die mittlere Kopfstütze aufnehmenden Bereich dem die äußeren Kopfstützen aufnehmenden Endbereich der Tragstangen entspricht. Durch diese Maßnahme ist sichergestellt, daß alle drei Kopfstützen gleich sein können.

Durch die vorgeschlagene Lösung ist es also möglich, daß nur durch den Einsatz einer einzigen, geänderten Tragstange eine dritte Kopfstütze an der Rücksitzbank realisierbar ist. Diese Ausgestaltung stellt sicher, daß sowohl in der Produktion, als auch durch den Fahrzeugbenutzer in besonders einfacher Weise und bei geringem Kostenaufwand eine dritte Kopfstütze vorgesehen, bzw. nachgerüstet werden kann. Ein weiterer Vorteil durch die erfindungsgemäße Anordnung besteht darin, daß die Befestigung für die mittlere Kopfstütze keinen Platz in der Rückenlehne benötigt, so daß unterhalb der mittleren Kopfstütze in der Rückenlehne problemlos eine Armlehne oder beispielsweise ein Skisack realisiert werden können. Wenn eine Höheneinstellung für die Kopfstützen vorgesehen werden soll, so sollte diese zweckmäßig in den Kopfstützen selbst erfolgen, da dann eine für jede Kopfstütze unabhängige Einstellung möglich ist.

Der Anspruch 2 beinhaltet eine vorteilhafte Ausgestaltung der Ansätze zur Halterung der mittleren Kopfstütze.

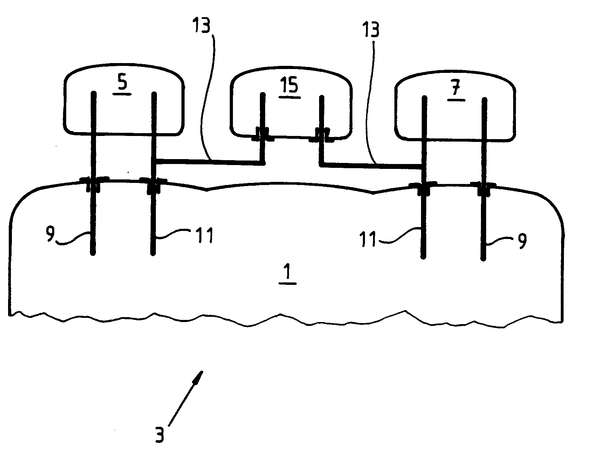

Ein Ausführungsbeispiel der Erfindung ist in der Zeichnung dargestellt und wird nachfolgend näher beschrieben.

Die Rückenlehne 1 einer Rücksitzbank 3 eines Personenkraftwagens trägt äußere Kopfstützen 5 und 7. Die beiden äußeren Kopfstützen 5 und 7 sind durch je eine äußere Tragstange 9 und je eine innere Tragstange 11 an der Rückenlehne 1 befestigt. Dazu sind in der Rückenlehne 1 entsprechende Halteeinrichtungen vorgesehen, welche in der Zeichnung nicht näher dargestellt sind. Wie aus der Zeichnung unmittelbar ersichtlich, ist an jeder inneren Tragstange 11 ein sich zur Fahrzeugmitte hin erstreckender Ansatz 13 angeformt. Die freien Enden der Ansätze 13 nehmen eine mittlere Kopfstütze 15 auf. Da die Ansätze 13 aus den gleichen Profilstangen wie die Tragstangen 9 und 11 hergestellt sind, und auch in ihrem Aufnahmebereich der Kopfstütze 15 in gleicher Weise ausgeführt sind, wie die entsprechenden Aufnahmebereiche der Tragstangen 9 und 11, ist es möglich, für die Kopfstützen 5, 7 und 15 Gleichteile einzusetzen.

Die beiden inneren Tragstangen 11 mit den angeformten Ansätzen 13 sind identische Teile, welche nur um 180° gedreht verbaut werden. Wenn keine mittlere Kopfstütze 15 gewünscht ist, dann kann jede der beiden äußeren Kopfstützen 5 und 7 durch zwei gleiche Tragstangen 9 an der Rückenlehne 1 befestigt werden.

## Patentansprüche

1. Rücksitzbank für Fahrzeuge, mit drei nebeneinander angeordneten Kopfstützen, wobei die beiden äußeren Kopfstützen durch je zwei Tragstangen an der Rücksitzbank gehalten sind, dadurch gekennzeichnet, daß oberhalb der Rücksitzbank (3) an jeder der mittleren Kopfstütze (15) zugewandten Tragstange (11) der äußeren Kopfstützen (5, 7) eine unter 90° abgewinkelte und sich zur Fahrzeugmitte hin erstreckende Profilstange (13) angebracht ist, und daß die freien, die mittlere Kopfstütze (15) aufnehmenden Endbereiche der beiden Profilstangen (13) den die äußeren Kopfstützen (5, 7) aufnehmenden Endbereichen der äußeren Tragstangen (9) entsprechen.

2. Rücksitzbank nach Anspruch 1, dadurch gekennzeichnet, daß die Profilstangen (13) Querschnitt und Oberfläche den Tragstangen (9, 11) entsprechen.

## Claims

1. Rear seat bench for vehicles, having three head restraints arranged alongside one another, the two outer head restraints respectively being held on the rear seat bench by two support rods, characterised in that mounted above the rear seat bench (3), on each support rod (11) for the outer head restraints (5, 7) that faces the middle head restraint (15), is a profiled bar (13) which is bent back at 90° and extends towards the centre of the vehicle, and that the free end portions, which receive the middle head restraint (15), of the two profiled bars (13) match the end portions of the outer support rods (9) which receive the outer head restraints (5, 7).

2. Rear seat bench according to claim 1, characterised in that the profiled bars (13) match the support rods (9, 11) in cross-section and surface area.

## Revendications

1. Banquette arrière pour véhicules automobiles, munie de trois appuie-tête disposés côte à côte, chacun des deux appuie-tête extérieurs étant maintenu sur la banquette arrière par deux barres porteuses, caractérisée en ce qu'une barre profilée (13), coudée a 90° et s'étendant vers le milieu du véhicule, est fixée, au-dessus de la banquette arrière (3), à chacune des barres porteuses (11) des appuie-tête extérieurs (5, 7) situées du côté de l'appuie-tête du milieu (15), et en ce que les parties d'extrémité des deux barres profilées (13), qui reçoivent l'appuie-tête du milieu (15), sont semblables aux parties d'extrémité des barres porteuses extérieures (9), qui reçoivent les appuie-tête extérieurs (5, 7).

2. Banquette arrière selon la revendication 1, caractérisée en ce que les barres profilées (13) ont une section et une surface qui sont semblables à celles des barres porteuses (9, 11).
